# EUROPÄISCHE PATENTSCHRIFT

(11) **EP 2 075 226 B1**
(45) Veröffentlichungstag und Bekanntmachung des Hinweises auf die Patenterteilung: **21.10.2015**
(21) Anmeldenummer: 08168697.4
(22) Anmeldetag: 10.11.2008
(51) Int. Cl.: C01B 3/38, H01M 8/06

(54) **Reformer, Brennstoffzelle und zugehörige Betriebsverfahren**
Reformer, fuel cell and associated operating procedure
Réformateur, cellules de combustible et procédé de fonctionnement correspondant

(30) Priorität: 16.11.2007 DE 102007054768
(43) Veröffentlichungstag der Anmeldung: 01.07.2009
(73) Patentinhaber: Eberspächer Climate Control Systems GmbH & Co. KG, 73730 Esslingen (DE)
(72) Erfinder: Kaupert, Andreas, 73730 Esslingen (DE); Reiners, Karsten, 73732 Esslingen (DE)
(74) Vertreter: BRP Renaud & Partner mbB Rechtsanwälte Patentanwälte Steuerberater

(56) Entgegenhaltungen:
- EP-A2- 1 845 577
- WO-A1-2006/061245
- FR-A1- 2 865 855
- US-A1- 2003 138 680

## Beschreibung

Die vorliegende Erfindung betrifft einen Reformer zum Generieren eines Wasserstoffgas enthaltenden Reformatgases mit den Merkmalen des Oberbegriffs des Anspruchs 1. Die Erfindung betrifft außerdem ein mit einem derartigen Reformer ausgestattetes Brennstoffzellensystem sowie Betriebsverfahren für den Reformer beziehungsweise das Brennstoffzellensystem.

Aus der DE 103 59 231 A1 ist ein Reformer bekannt, mit dessen Hilfe aus einem Wasserstoff enthaltenden Brennstoff und einem Oxidator ein Wasserstoffgas enthaltendes Reformatgas generiert werden kann. Der Reformer ist mit einer an eine Ausgangsseite des Reformers angeschlossenen Reformatgasleitung ausgestattet, mit deren Hilfe das Reformatgas vom Reformer weggeführt werden kann. Der Reformer ist dabei in einem Brennstoffzellensystem angeordnet, in dem das Reformatgas einer Brennstoffzelle als Anodengas zugeführt wird. Dem Reformer kann seinerseits Anodenabgas der Brennstoffzelle eingangsseitig rückgeführt werden, was die Effizienz des Reformers erhöht.

Ein gattungsgemäßer Reformer ist aus der US 2003/138680 A1 bekannt. Er umfasst eine Reformatgasleitung zum Wegführen von Reformatgas vom Reformer, die an eine Ausgangsseite des Reformers angeschlossen ist, und eine Rezirkulationsleitung zum Rezirkulieren von Reformatgas zum Reformer, die einerseits an die Reformatgasleitung und andererseits an eine Eingangsseite des Reformers angeschlossen ist. Beim bekannten Reformer wird dabei das rückgeführte Reformatgas zusammen mit Luft und mit Kraftstoff in einem Reaktor umgesetzt.

Aus der DE 10 2004 002 337 A1 ist ein Brennstoffzellensystem bekannt, bei dem ebenfalls eine Rezirkulation von Anodenabgas zur Eingangsseite des Reformers vorgesehen ist, wobei in einer entsprechenden Rezirkulationsleitung ein Wärmeübertrager angeordnet ist, mit dessen Hilfe der Brennstoffzelle zugeführtes Kathodengas vorgewärmt werden kann.

Weitere Reformer, bei denen Reformatgas, Brennstoffgas und Luft vermischt und umgesetzt werden, sind aus der WO 2006/061245 A1, aus der FR 2 865 855 A1, aus der US 2003138680 A1 und aus der EP 1 845 577 A2 bekannt.

Es hat sich gezeigt, dass eine möglichst kurze Startphase für einen effizienten Einsatz eines Brennstoffzellensystems besonders vorteilhaft ist, insbesondere dann, wenn es in einem Kraftfahrzeug als Hilfsstromquelle oder als ausschließliche Stromquelle zum Einsatz kommt. Eine kurze Startphase erhöhte die Verfügbarkeit von Strom und reduziert den Energieverbrauch sowie die Schadstoffemissionen.

Die vorliegende Erfindung beschäftigt sich mit dem Problem, für einen Reformer beziehungsweise für ein damit ausgestattetes Brennstoffzellensystem beziehungsweise für zugehörige Betriebsverfahren eine verbesserte Ausführungsform anzugeben, die sich insbesondere dadurch auszeichnet, dass die Zeit zwischen einem Kaltstart des Reformers und einem Volllastbetrieb des Reformers reduziert oder zumindest relativ kurz ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Reformer beziehungsweise das Brennstoffzellensystem mit einer Rezirkulationsleitung zu versehen, welche die Eingangsseite des Reformers mit der Reformatgasleitung verbindet. Hierdurch wird eine Möglichkeit geschaffen, vom Reformer selbst erzeugtes Reformatgas zum Beispiel für den Kaltstartbetrieb wieder dem Reformer eingangsseitig zuzuführen und im Reformer umzusetzen, um dadurch den Wärmeeintrag in den Reformer zu erhöhten. Dies erfolgt vorwiegend durch Verbrennung beziehungsweise Umsetzung des Reformatgases mit einem Teil des dem Reformer zugeführten Oxidators. Das in hohem Maße reaktionsfähige Reformatgas beschleunigt signifikant die Aufheizung des Reformers, wodurch dieser rasch seine Betriebstemperatur erreicht und in der Folge mit Volllast betrieben werden kann. Die vorgeschlagene Maßnahme ermöglicht somit eine Reduzierung der Startzeit beziehungsweise der Warmlaufphase des Reformers. Erfindungsgemäß ist ferner eine Vorreaktionskammer vorgesehen, an welche die Rezirkulationsleitung und eine dem Reformer Oxidator zuführende Oxidatorleitung angeschlossen sind und welche mit einem Gemischbildungsabschnitt des Reformers kommuniziert, an den eine dem Reformer Brennstoff zuführende Brennstoffleitung angeschlossen ist.

Entsprechend einer vorteilhaften Ausführungsform kann ein Rezirkulationswärmeübertrager vorgesehen sein, der einerseits in die Rezirkulationsleitung und andererseits in eine andere Leitung eingebunden ist, die ein mit dem rezirkulierten Reformatgas aufwärmbares Medium transportiert. Mit Hilfe eines derartigen Rezirkulationswärmeübertragers kann beispielsweise der dem Reformer zugeführte Oxidator und/oder der dem Reformer zugeführte Brennstoff vorgewärmt werden. Zusätzlich oder alternativ kann für den Fall, dass der Reformer einen Bestandteil eines Brennstoffzellensystems bildet, über den Rezirkulationswärmeübertrager Kathodengas auf-geheizt werden, das einer Brennstoffzelle des Brennstoffzellensystems zugeführt wird. Insoweit lässt sich die Wärme des Reformatgases zusätzlich zum Aufheizen von Edukten und somit zur Effizienzsteigerung nutzen.

Ferner kann eine Fördereinrichtung in der Rezirkulationsleitung angeordnet sein, mit deren Hilfe das Reformatgas von der Reformatgasleitung angesaugt und zur Eingangsseite des Reformers gefördert wird. Eine derartige Fördereinrichtung kann zur Überwindung eines Druckgefälles zwischen Reformatgasleitung und Reformereingangsseite zweckmäßig sein. Besonders vorteilhaft ist dabei die Anordnung dieser Fördereinrichtung stromab des zuvor genannten Rezirkulationswärmeübertragers. Auf diese Weise kann die Fördereinrichtung vergleichsweise preiswert realisiert werden, da sie nur mit vergleichsweise kaltem Reformatgas beaufschlagt wird.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

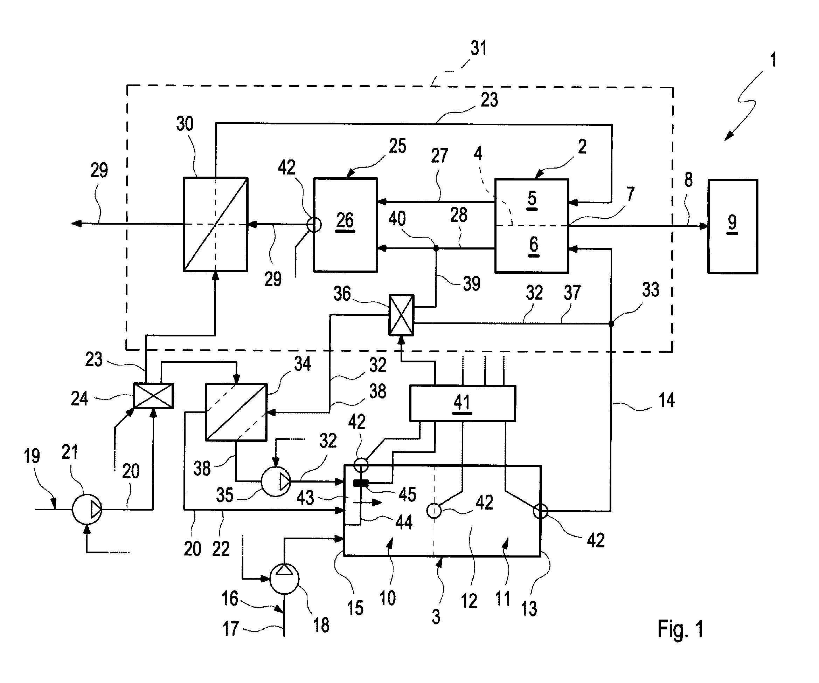

Die einzige Fig. 1 zeigt eine stark vereinfachte, schaltplanartige Prinzipdarstellung eines Brennstoffzellensystems.

Entsprechend Fig. 1 umfasst ein Brennstoffzellensystem 1 zumindest eine Brennstoffzelle 2 sowie wenigstens einen Reformer 3. Die Brennstoffzelle 2 kann in bekannter Weise aus einem Sauerstoffgas enthaltenden Kathodengas, bei dem es sich beispielsweise um Luft handelt, und einem Wasserstoffgas enthaltenden Anodengas Strom generieren. Hierzu trennt in der Brennstoffzelle 2 ein Elektrolyt 4 eine Kathodenseite 5 von einer Anodenseite 6. Der Strom ist an zumindest einem Stromanschluss 7 abgreifbar und über wenigstens eine Stromleitung 8 einem oder mehreren elektrischen Verbrauchern 9 zuführbar. Üblicherweise ist die Brennstoffzelle 2 aus einem Stapel einzelner Brennstoffzellenelemente aufgebaut, in denen jeweils ein Elektrolyt 4 die Anodenseite 6 von der Kathodenseite 5 trennt.

Die Brennstoffzelle 2 kann als Hochtemperatur-Brennstoffzelle ausgestaltet sein, zum Beispiel als Festkörper-Brennstoffzelle oder SOFC-Brennstoffzelle. Alternativ kann die Brennstoffzelle 2 auch als Niedertemperatur-Brennstoffzelle ausgestaltet sein.

Der Reformer 3 dient in bekannte Weise zum Generieren eines Wasserstoffgas enthaltenden Reformatgases, das der Brennstoffzelle 2 als Anodengas zuführbar ist. Der Reformer 3 generiert das Reformatgas, also das Anodengas, aus einem Wasserstoff enthaltenden Brennstoff, bei dem es sich zweckmäßig um einen Kohlenwasserstoff zum Betreiben einer Brennkraftmaschine eines mit dem Brennstoffzellensystem 1 ausgestatteten Fahrzeugs handelt, und aus einem Sauerstoff enthaltenden Oxidator, bei dem es sich zweckmäßig um Luft handelt. Der Reformer 3 umfasst üblicherweise einen Gemischbildungsbereich 10 sowie einen nachgeordneten Reformierungsbereich 11. Im Gemischbildungsbereich 10 erfolgt zumindest eine Durchmischung des Oxidators und des Brennstoffs. Sofern der Brennstoff dem Reformer 3 flüssig zugeführt wird, erfolgt im Gemischbildungsbereich 10 außerdem eine Verdampfung des Brennstoffs. Der Gemischbildungsbereich 10 kann zum Beispiel bei der Verwendung von Dieselkraftstoff mit einer kalten Flamme arbeiten, um die Verdampfung beziehungsweise Umsetzung des Brennstoffs zu beschleunigen. Der Reformierungsbereich 11 enthält üblicherweise einen Katalysator 12, der mittels partieller Oxidation die Kohlenwasserstoffe mit dem Sauerstoff in Wasserstoff und Kohlenmonoxid aufspaltet.

An eine Ausgangsseite 13 des Reformers 3 ist eine Reformatgasleitung 14 angeschlossen, die auch als Anodengasleitung 14 bezeichnet werden kann. An eine Eingangsseite 15 des Reformers 3 ist eine Brennstoffzuführung 16 angeschlossen, die eine Brennstoffleitung 17 und eine darin angeordnete Fördereinrichtung 18, zum Beispiel eine Pumpe, aufweist. An die Eingangsseite 15 ist außerdem eine Oxidatorzuführung 19 angeschlossen, die in einer Oxidatorleitung 20 eine Fördereinrichtung 21 aufweist, bei der es sich um ein Gebläse handeln kann. Die Oxidatorleitung 20 besitzt im gezeigten Beispiel zwei Zweige, nämlich einen zum Reformer 3 führenden Reformerzweig 22 und einen zur Brennstoffzelle 2 führenden Brennstoffzellenzweig 23. Die beiden Zweige 22, 23 zweigen zum Beispiel über eine Ventileinrichtung 24 voneinander ab. Der Brennstoffzellenzweig 23 kann auch als Kathodengasleitung 23 bezeichnet werden, da er den Sauerstoffgas enthaltenden Oxidator der Brennstoffzelle 2 kathodenseitig zuführt. Alternativ können für die Versorgung mit Oxidator des Reformers 3 und der Brennstoffzelle 2 separate Versorgungseinrichtungen mit separaten Fördereinrichtungen und getrennten Leitungen vorgesehen sein.

Im Beispiel weist das Brennstoffzellensystem 1 außerdem einen Restgasbrenner 25 auf, der in einem Brennraum 26 Kathodenabgas mit Anodenabgas umsetzt, und zwar mit einer Verbrennungsreaktion, bei der ein Brennerabgas entsteht. Das Kathodenabgas wird hier über eine Kathodenabgasleitung 27 von der Brennstoffzelle 2 dem Restgasbrenner 25 zugeführt. Das Anodenabgas wird hier über eine Anodenabgasleitung 28 von der Brennstoffzelle 2 dem Restgasbrenner 25 zugeführt. Das Brennerabgas wird hier vom Restgasbrenner 25 über eine Abgasleitung 29 abgeführt. In diese Abgasleitung 29 kann ein Wärmeübertrager 30 eingebunden sein, in dem außerdem die Kathodengasleitung 23 beziehungsweise der Brennstoffzellenzweig 23 eingebunden sein kann. Auf diese Weise kann mit Hilfe des Brennerabgases das der Brennstoffzelle 2 zugeführte Kathodengas vorgewärmt werden. Dem Wärmeübertrager 30 kann in der Abgasleitung 29 zumindest ein weiterer Wärmeübertrager nachgeordnet sein. Ebenso können Abgasbehandlungseinrichtungen, wie zum Beispiel ein Oxidationskatalysator oder dergleichen, in der Abgasleitung 29 angeordnet sein.

Im gezeigten Beispiel bilden die Brennstoffzelle 2, der Restgasbrenner 25 und der Wärmeübertrager 30 separate Bauteile. Bei einer anderen Ausführungsform ist es möglich, den Restgasbrenner 25 in eine Ausgangsseite der Brennstoffzelle 2 baulich zu integrieren. Zusätzlich oder alternativ ist es möglich, den Wärmeübertrager 30 in eine Ausgangsseite des Restgasbrenners 25 baulich zu integrieren.

Durch eine unterbrochene Linie ist hier außerdem eine Isolationsbox 31 angedeutet, die aus einem thermisch isolierenden Material besteht und welche hier die Brennstoffzelle 2, den Restgasbrenner 25 und den Wärmeübertrager 30 umschließt. Zusätzlich kann eine weitere Isolationsbox vorgesehen sein, die zumindest den Reformer 3 umschließt. Ebenso kann der Reformer 3 in der gezeigten Isolationsbox 31 angeordnet sein.

Erfindungsgemäß ist der Reformer 3 beziehungsweise das Brennstoffzellensystem 1 außerdem mit einer Rezirkulationsleitung 32 ausgestattet. Diese ist einenends bei 33 an die Reformatgasleitung 14 angeschlossen und andererseits an die Eingangsseite 15 des Reformers 3 angeschlossen. Mit Hilfe der Rezirkulationsleitung 32 kann somit Reformatgas oder Anodengas von der Reformatgasleitung 14 der Eingangsseite 15 des Reformers 3 rückgeführt werden.

In der Rezirkulationsleitung 32 ist ein Rezirkulationswärmeübertrager 34 angeordnet, in den außerdem der Reformerzweig 22 der Oxidatorleitung 20 eingebunden ist. Insoweit kann eine Wärmeübertragung zwischen dem rezirkulierten Reformatgas und dem dem Reformer 3 zugeführten Oxidatorgas realisiert werden. Ebenso ist es grundsätzlich möglich, die Ventileinrichtung 24 erst stromab des Rezirkulationswärmeübertragers 34 anzuordnen, so dass über den Rezirkulationswärmeübertrager 34 zusätzlich auch das der Brennstoffzelle 2 zugeführten Oxidatorgas aufheizbar ist. Ebenso ist eine Ausführungsform denkbar, bei welcher mit Hilfe des Rezirkulationswärmeübertragers 34 nur das der Brennstoffzelle 2 zugeführte Oxidatorgas aufgeheizt wird.

Die Rezirkulationsleitung 32 enthält eine Fördereinrichtung 35, bei der es sich um eine Pumpe, ein Gebläse oder um einen Kompressor oder einen Verdichter oder dergleichen handeln kann. Diese Fördereinrichtung 35 ist zweckmäßig stromab des Rezirkulationswärmeübertragers 34 angeordnet. Hierdurch lässt sich erreichen, dass das der Fördereinrichtung 35 zugeführte Reformatgas so weit abgekühlt ist, dass die Fördereinrichtung 35 vergleichsweise preiswert aufgebaut sein kann.

Die hier gezeigte besondere Ausführungsform ist außerdem mit einer Ventileinrichtung 36 ausgestattet, mit deren Hilfe ein von der Ventileinrichtung 36 zur Reformatgasleitung 14 führender Abschnitt 37 der Rezirkulationsleitung 32 mit einem von der Ventileinrichtung 36 zum Reformer 3 führenden Abschnitt 38 der Rezirkulationsleitung 32 verbindbar ist. Ferner kann die Ventileinrichtung 36 einen weiteren Abschnitt 39 der Rezirkulationsleitung 32, der von der Ventileinrichtung 36 im Beispiel zur Anodenabgasleitung 28 führt, mit dem zum Reformer 3 führenden Abschnitt 38 verbinden. Somit kann über eine entsprechende Ansteuerung der Ventileinrichtung 36 dem Reformer 3 wahlweise Reformatgas oder Anodenabgas oder eine beliebige Mischung daraus zugeführt werden. Der weitere Abschnitt 39 der Rezirkulationsleitung 32 zweigt im Beispiel bei 40 von der Anodenabgasleitung 28 ab. Bei einer integralen Bauweise von Brennstoffzelle 2 und Restgasbrenner 25 befindet sich diese Abzweigung 40 an einer geeigneten Stelle in der Ausgangsseite der Brennstoffzelle 2.

Bei der hier gezeigten Ausführungsform ist der Reformer 3 im Bereich seines Gemischbildungsabschnitts 10 mit einer Vorreaktionszone 43 ausgestattet, die beispielsweise mittels einer separaten, vorgeschalteten Vorreaktionskammer 44 gebildet ist. An diese Vorreaktionskammer 44 sind eingangsseitig die Oxidatorzuführung 19 beziehungsweise deren Reformerzweig 22 und die Rezirkulationsleitung 32 angeschlossen. Ausgangsseitig führt die Vorreaktionskammer 44 zur nicht näher bezeichneten Hauptreaktionszone des Gemischbildungsabschnitts 10, an die auch die Brennstoffzuführung 16 angeschlossen ist. Durch diese Bauweise wird erreicht, dass für den Fall, dass über die Rezirkulationsleitung 32 Reformatgas und/oder Anodenabgas zugeführt wird, dieses vorab mit einem Teil des dem Reformer 3 zugeführten Oxidators in der Vorreaktionszone 43 umgesetzt werden kann, so dass heiße Reaktionsgase dem Gemischbildungsabschnitt 10 beziehungsweise dem Reformer 3 zugeführt werden. Besonders vorteilhaft kann hierzu die Vorreaktionskammer 44 so ausgestaltet sein, dass sie den Reformer 3, insbesondere im Bereich des Gemischbildungsabschnitts 10 ringförmig umschließt.

Um in der Vorreaktionszone 43 das Gemisch aus Oxidator und Reformatgas beziehungsweise Anodenabgas sicher zünden zu können, kann optional eine Zündeinrichtung 45, zum Beispiel eine Zündkerze oder ein Glühstift oder ein beliebiges anderes Zündorgan, vorgesehen sein. Zur Überwachung dieser Vorreaktion kann außerdem im Bereich der Vorreaktionskammer 44 ein geeigneter Temperatursensor 42 angeordnet sein. Unabhängig davon kann das Brennstoffzellensystem 1 mit weiteren Sensoren 42 zur Druck- und/oder Temperaturmessung ausgestattet sein.

Des weiteren ist hier eine Steuerung 41 vorgesehen, die mit den steuerbaren Komponenten des Brennstoffzellensystems 1, also insbesondere mit den Ventileinrichtungen 24, 36, mit der Zündeinrichtung 45 und mit den Fördereinrichtungen 18, 21, 35, verbunden ist. Ferner kann die Steuerung 41 mit den Sensoren 42 verbunden sein, die beispielsweise zur Temperaturmessung oder zur Druckmessung oder dergleichen dienen.

Der hier gezeigte Reformer 3 beziehungsweise das hier gezeigte Brennstoffzellensystem 1 lässt sich wie folgt betreiben:
Während eines Kaltstarts besitzen die Komponenten des Brennstoffzellensystems 1 Umgebungstemperatur. Zu Beginn wird der Reformer 3 als Brenner betrieben, um ihn auf eine Starttemperatur zu bringen. Sobald der Reformer 3 Reformatgas generieren kann, kann dieses über die Rezirkulationsleitung 32 bei einer entsprechenden Betätigung der Ventileinrichtung 36 dem Reformer 3 rückgeführt werden. Da das Reformatgas Wasserstoffgas sowie Kohlenmonoxidgas enthält, reagiert es zum Beispiel in der Vorreaktionszone 43 bereits bei vergleichsweise niedrigen Temperaturen und ermöglicht einen intensiven Wärmeeintrag in den Reformer 3. Hierdurch lässt sich der Reformer 3, insbesondere sein Katalysator 12, vergleichsweise schnell aufheizen. Der Reformer 3 erreicht dadurch vergleichsweise rasch seine Betriebstemperatur, was die Warmlaufphase verkürzt und die Effizienz des Reformers 3 beziehungsweise des Brennstoffzellensystems 1 steigert. Gleichzeitig kann durch das rückgeführte Reformatgas das dem Reformer 3 zugeführte Oxidatorgas vorgeheizt werden, was eine zusätzliche Aufwärmung des Reformers 3 ermöglicht. Für den Kaltstartbetrieb ist es somit möglich, einen mehr oder weniger großen Anteil des Reformatgases dem Reformer 3 rückzuführen, während das übrige Reformatgas zum Aufheizen der Brennstoffzelle 2 genutzt werden kann, bis diese Strom produzieren kann.

Sobald die Brennstoffzelle 2 ihre Betriebstemperatur erreicht hat, betätigt die Steuerung 41 die Ventileinrichtung 36 so, dass kein Reformatgas mehr direkt unter Umgehung der Brennstoffzelle 2 dem Reformer 3 zugeführt wird. Bedarfsabhängig kann aber die Steuerung 41 die Ventileinrichtung 36 so ansteuern, dass stattdessen über den weiteren Zweig 39 Anodenabgas, das nicht umgesetztes Reformatgas enthalten kann, dem Reformer 3 rückgeführt wird. Dies ist insbesondere dann zweckmäßig, wenn vergleichsweise wenig Strom an der Brennstoffzelle 2 abgegriffen wird, so dass nur relativ wenig Anodengas in der Brennstoffzelle 2 umgesetzt wird.

Besonders vorteilhaft ist bei dieser Bauweise, dass die für den Normalbetrieb vorgesehene Rezirkulation von Anodenabgas und die für den Startbetrieb vorgesehene Rezirkulation von Reformatgas weitgehend über die gleichen gasführenden Komponenten erfolgen kann, nämlich hier über die Ventileinrichtung 36, den zum Reformer 3 führenden Abschnitt 38 der Rezirkulationsleitung 32, den Rezirkulationswärmeübertrager 34 und die Fördereinrichtung 35.

## Patentansprüche

1. Reformer zum Generieren eines Wasserstoffgas enthaltenden Reformatgases aus einem Wasserstoff enthaltenden Brennstoff und einem Oxidator, insbesondere für ein Brennstoffzellensystem (1), mit einer an eine Ausgangsseite (13) des Reformers (3) angeschlossenen Reformatgasleitung (14) zum Wegführen von Reformatgas vom Reformer (3), wobei eine Rezirkulationsleitung (32) zum Rezirkulieren von Reformatgas zum Reformer (3) vorgesehen ist, die einerseits an die Reformatgasleitung (14) und andererseits an eine Eingangsseite (15) des Reformers (3) angeschlossen ist,
**dadurch gekennzeichnet,**
**dass** eine Vorreaktionskammer (44) vorgesehen ist, an welche die Rezirkulationsleitung (32) und eine dem Reformer (3) Oxidator zuführende Oxidatorleitung (20) angeschlossen sind und welche mit einem Gemischbildungsabschnitt (10) des Reformers (3) kommuniziert, an den eine dem Reformer (3) Brennstoff zuführende Brennstoffleitung (17) angeschlossen ist.

2. Reformer nach Anspruch 1,
**dadurch gekennzeichnet,**
**dass** ein Rezirkulationswärmeübertrager (34) vorgesehen ist, der einerseits in die Rezirkulationsleitung (32) und andererseits in eine ein mit dem rezirkulierten Reformatgas aufwärmbares Medium transportierende andere Leitung (20, 22, 23) eingebunden ist.

3. Reformer nach Anspruch 2,
**dadurch gekennzeichnet,**
**dass** die andere Leitung eine Oxidatorleitung (20, 22, 23) ist, die dem Reformer (3) und/oder einer Brennstoffzelle (2) Oxidatorgas zuführt.

4. Reformer nach einem der Ansprüche 1 bis 3,
**dadurch gekennzeichnet,**
**dass** in der Rezirkulationsleitung (32), insbesondere stromab des Rezirkulationswärmeübertragers (34), eine Fördereinrichtung (35) angeordnet ist.

5. Reformer nach einem der Ansprüche 1 bis 4,
**dadurch gekennzeichnet,**
**dass** in der Rezirkulationsleitung (32), insbesondere stromauf des Rezirkulationswärmeübertragers (34), eine Ventileinrichtung (36) angeordnet ist, die einen von der Ventileinrichtung (36) zum Reformer (3) führenden Abschnitt (38) der Rezirkulationsleitung (32) wahlweise mit einem von der Reformatgasleitung (14) zur Ventileinrichtung (36) führenden Abschnitt (37) der Rezirkulationsleitung (32) oder mit einem weiteren Abschnitt (39) der Rezirkulationsleitung (32) verbindet, über den Anodenabgas einer Brennstoffzelle (2) dem Reformer (3) zuführbar ist.

6. Reformer nach einem der Ansprüche 1 bis 5,
**dadurch gekennzeichnet,**
**dass** eine Steuerung (41) vorgesehen ist, die mit Komponenten des Reformers (3) oder des Brennstoffzellensystems (1) so zusammenwirkt und die so ausgestaltet ist, dass sie den Reformer (3) oder das Brennstoffzellensystem (1) zum Ausführen eines Verfahrens nach einem der Ansprüche 8 bis 11 betreiben kann.

7. Verfahren zum Betreiben eines zum Generieren eines Wasserstoffgas enthaltenden Reformatgases aus Wasserstoff enthaltendem Brennstoff und Oxidator dienenden Reformers (3), bei dem während eines Kaltstarts vom Reformer (3) erzeugtes Reformatgas von einer Ausgangsseite (13) des Reformers (3) ganz oder teilweise einer Eingangsseite (15) des Reformers (3) über gasführende Komponenten (32, 34, 35, 36, 37, 38) rückgeführt wird,
**dadurch gekennzeichnet,**
**dass** das rückgeführte Reformatgas mit einem Teil des dem Reformer (3) zugeführten Oxidators in einer Vorreaktionskammer (44) umgesetzt wird, bevor dem Rest des Oxidators mit den Reaktionsprodukten dieser Vorreaktion der Brennstoff zugeführt wird.

8. Verfahren zum Betreiben eines Brennstoffzellensystems (1), das einen zum Generieren eines Wasserstoffgas enthaltenden Reformatgases aus Wasserstoff enthaltendem Brennstoff und Oxidator dienenden Reformer (3) und eine zum Generieren von elektrischem Strom aus dem als Anodengas dienenden Reformatgas und einem Oxidatorgas dienende Brennstoffzelle (2) umfasst, bei dem während eines Kaltstarts vom Reformer (3) erzeugtes Reformatgas von einer Ausgangsseite (13) des Reformers (3) ganz oder teilweise einer Eingangsseite (15) des Reformers (3) über gasführende Komponenten (32, 34, 35, 36, 37, 38) rückgeführt wird,
**dadurch gekennzeichnet,**
**dass** das rückgeführte Reformatgas mit einem Teil des dem Reformer (3) zugeführten Oxidators in einer Vorreaktionskammer (44) umgesetzt wird, bevor dem Rest des Oxidators mit den Reaktionsprodukten dieser Vorreaktion der Brennstoff zugeführt wird.

9. Verfahren nach Anspruch 8,
**dadurch gekennzeichnet,**
**dass** während eines Normalbetriebs von der Brennstoffzelle (2) erzeugtes Anodenabgas der Eingangsseite (15) des Reformers (3) zugeführt wird, wobei dies über einen Teil der besagten gasführenden Komponenten (32, 34, 35, 36, 37, 38) erfolgt.

10. Verfahren nach Anspruch 9,
**dadurch gekennzeichnet,**
**dass** das rückgeführte Anodenabgas mit einem Teil des dem Reformer (3) zugeführten Oxidators in der Vorreaktionskammer (44) umgesetzt wird, bevor dem Rest des Oxidators mit den Reaktionsprodukten dieser Vorreaktion der Brennstoff zugeführt wird.

11. Brennstoffzellensystem, insbesondere in einem Kraftfahrzeug,
- mit wenigstens einem Reformer (3) nach einem der Ansprüche 1 bis 6,
- mit wenigstens einer Brennstoffzelle (2) zum Generieren von elektrischem Strom aus dem als Anodengas dienenden Reformatgas und einem Oxidatorgas.

## Claims

1. Reformer for generating a hydrogen gas-containing reformate gas from a fuel containing hydrogen and an oxidiser, in particular for a fuel cell system (1), having a reformate gas line (14) connected to an output side (13) of the reformer (3) for carrying away reformate gas from the reformer (3), a recirculation line (32) being provided for recirculating reformate gas to the reformer (3), which is connected on the one hand to the reformate gas line (14) and on the other hand to an input side (15) of the reformer (3),
**characterised in that**
a pre-reaction chamber (44) is provided, to which the recirculation line (32) and an oxidiser line (20) supplying oxidiser to the reformer (3) are connected, and which chamber communicates with a mixture-forming portion (10) of the reformer (3) to which a fuel line (17) supplying fuel to the reformer (3) is connected.

2. Reformer according to claim 1,
**characterised in that**
a recirculation heat exchanger (34) is provided, which is integrated on the one hand in the recirculation line (32) and on the other hand in a further line (20, 22, 23) transporting a heatable medium together with the recirculated reformate gas.

3. Reformer according to claim 2,
**characterised in that**
the further line is an oxidiser line (20, 22, 23) which supplies oxidiser gas to the reformer (3) and/or to a fuel cell (2).

4. Reformer according to any of claims 1 to 3,
**characterised in that**
a conveyor (35) is arranged in the recirculation line (32), in particular downstream of the recirculation heat exchanger (34).

5. Reformer according to any of claims 1 to 4,
**characterised in that**
a valve device (36) is arranged in the recirculation line (32), in particular upstream of the recirculation heat exchanger (34), which valve optionally connects a portion (38) of the recirculation line (32) leading from the valve device (36) to the reformer (3) with a portion (37) of the recirculation line (32) leading from of the reformate gas line (14) to the valve device (36), or with a further portion (39) of the recirculation line (32) via which the anode exhaust of a fuel cell (2) can be fed to the reformer (3).

6. Reformer according to any of claims 1 to 5,
**characterised in that**
a controller (41) is provided, which interacts with components of the reformer (3) or of the fuel cell system (1) in such a way and is designed in such a way that it can operate the reformer (3) or the fuel cell system (1) can so as to implement a method according to any of claims 8 to 11.

7. Method for operating a reformer (3) used for generating a hydrogen gas-containing reformate gas from fuel containing hydrogen and an oxidiser, in which reformate gas generated by the reformer (3) during a cold start is recycled from an output side (13) of the reformer (3) in full or in part to an input side (15) of the reformer (3) via gas-carrying components (32, 34, 35, 36, 37, 38),
**characterised in that**
the recycled reformate gas is reacted in a pre-reaction chamber (44) with a part of the oxidiser supplied to the reformer (3), before the remainder of the oxidiser is supplied together with the reaction products of this pre-reaction of the fuel.

8. Method for operating a fuel cell system (1) comprising a reformer (3) used for generating a hydrogen gas-containing reformate gas from fuel containing hydrogen and an oxidiser, and a fuel cell (2) used for generating electric current from reformate gas serving as anode gas and from an oxidiser gas, in which reformate gas generated by the reformer (3) during a cold start is recycled from an output side (13) of the reformer (3) in full or in part to an input side (15) of the reformer (3) via gas-carrying components (32, 34, 35, 36, 37, 38),
**characterised in that**
the recycled reformate gas is reacted in a pre-reaction chamber (44) with a part of the oxidiser supplied to the reformer (3), before the remainder of the oxidiser is supplied together with the reaction products of this pre-reaction of the fuel.

9. Method according to claim 8,
**characterised in that**
anode exhaust gas produced during normal operation of the fuel cell (2) is supplied to the input side (15) of the reformer (3), this occurring via some of said gas-carrying components (32, 34, 35, 36, 37, 38).

10. Method according to claim 9,
**characterised in that**
the recycled anode exhaust gas is reacted in the pre-reaction chamber (44) with a part of the oxidiser supplied to the reformer (3), before the remainder of the oxidiser is supplied together with the reaction products of this pre-reaction of the fuel.

11. Fuel cell system, in particular in a motor vehicle,
- comprising at least one reformer (3) according to any of claims 1 to 6,
- comprising at least one fuel cell (2) for generating electric current from the reformate gas serving as anode gas and from an oxidiser gas.

## Revendications

1. Reformeur pour générer un gaz de reformage contenant du gaz combustible à partir d'un combustible contenant de l'hydrogène et un oxydant, en particulier pour un système de piles à combustible (1), comprenant un conduit de gaz de reformage (14) raccordé à un côté de sortie (13) du reformeur (3) pour évacuer le gaz de reformage du reformeur (3), dans lequel un conduit de remise en circulation (32) est prévu pour refaire circuler le gaz de reformage vers le reformeur (3), lequel conduit est raccordé, d'une part, au conduit de gaz de reformage (14) et, d'autre part, à un côté d'entrée (15) du reformeur (3),
**caractérisé en ce que** :
il est prévu une chambre de pré-réaction (44) à laquelle le conduit de remise en circulation (32) et un conduit d'agent oxydant (20) acheminant de l'agent oxydant au reformeur (3) sont raccordés et qui communique avec une section de formation de mélange (10) du reformeur (3) à laquelle est raccordé un conduit de combustible (17) acheminant du combustible au reformeur (3) ;

2. Reformeur selon la revendication 1, **caractérisé en ce que** :
il est prévu un échangeur de chaleur de remise en circulation (34), qui est intégré, d'une part, au conduit de remise en circulation (32) et, d'autre part, a un autre conduit (20, 22, 23) transportant un agent chauffant au gaz de reformage remis en circulation.

3. Reformeur selon la revendication 2, **caractérisé en ce que** :
l'autre conduit est un conduit d'agent oxydant (20, 22, 23) qui achemine du gaz oxydant au reformeur (3) et/ou à une pile à combustible (2).

4. Reformeur selon l'une quelconque des revendications 1 à 3,
**caractérisé en ce que** :
dans le conduit de remise en circulation (32), en particulier en aval de l'échangeur de chaleur de remise en circulation (34), est aménagé un dispositif de transport (35).

5. Reformeur selon l'une quelconque des revendications 1 à 4,
**caractérisé en ce que** :
dans le conduit de remise en circulation (32), en particulier en amont de l'échangeur de chaleur de remise en circulation (34), est aménagé un dispositif à soupape (36) qui relie une section (38) du conduit de remise en circulation (32) menant du dispositif à soupape (36) au reformeur (3), au choix, à une section (37) du conduit de remise en circulation (32) menant du conduit de gaz de reformage (14) au dispositif à soupape (36) ou à une autre section (39) du conduit de remise en circulation (32), par laquelle des gaz d'échappement anodiques d'une pile à combustible (2) peuvent être acheminés au reformeur (3).

6. Reformeur selon l'une quelconque des revendications 1 à 5,
**caractérisé en ce que** :
il est prévu une commande (41), qui coopère avec des composants du reformeur (3) ou du système de piles à combustible (1) et est conçue en sorte qu'elle puisse commander le reformeur (3) ou le système de piles à combustible (1) pour effectuer un procédé selon l'une quelconque des revendications 8 à 11.

7. Procédé de commande d'un reformeur (3) servant à générer un gaz de reformage contenant de l'hydrogène gazeux à partir d'un combustible contenant de l'hydrogène et d'un agent oxydant, dans lequel, au cours d'un démarrage à froid du reformeur (3), le gaz de reformage produit est recyclé par un côté de sortie (13) du reformeur (3) en totalité ou en partie à un côté d'entrée (15) du reformeur (3) via des composants de transport de gaz (32, 34, 35, 36, 37, 38),
**caractérisé en ce que** :
le gaz de reformage recyclé est converti avec une partie de l'agent oxydant acheminé au reformeur (3) dans une chambre de pré-réaction (44) avant que le combustible ne soit acheminé au restant de l'agent oxydant avec les produits réactionnels de cette pré-réaction.

8. Procédé de commande d'un système de piles à combustible (1), qui comprend un reformeur (3) servant à générer un gaz de reformage contenant de l'hydrogène gazeux à partir de combustible contenant de l'hydrogène et d'un agent oxydant et une pile à combustible (2) servant à générer du courant électrique à partir du gaz de reformage servant de gaz anodique et d'un gaz d'agent oxydant, dans lequel, au cours d'un démarrage à froid du reformeur (3), le gaz de reformage produit est recyclé d'un côté de sortie (13) du reformeur (3) en totalité ou en partie à un côté d'entrée (15) du reformeur (3) via des composants transportant du gaz (32, 34, 35, 36, 37, 38),
**caractérisé en ce que** :
le gaz de reformage recyclé est converti avec une partie de l'agent oxydant acheminé au reformeur (3) dans une chambre de pré-réaction (44) avant que le combustible ne soit acheminé au reste de l'agent oxydant avec les produits réactionnels de cette pré-réaction.

9. Procédé selon la revendication 8, **caractérisé en ce que**, au cours d'un fonctionnement normal de la pile à combustible (2), les gaz d'échappement anodiques produits sont acheminés au côté d'entrée (15) du reformeur (3), dans lequel cela se fait via une partie desdits composants de transport de gaz (32, 34, 35, 36, 37, 38).

10. Procédé selon la revendication 9,
**caractérisé en ce que** :
les gaz d'échappement anodiques recyclés sont convertis avec une partie de l'agent oxydant acheminé au reformeur (3) dans la chambre de pré-réaction (44) avant que le combustible ne soit acheminé au restant de l'agent oxydant avec les produits réactionnels de cette pré-réaction.

11. Système de piles à combustible, en particulier dans un véhicule automobile, comprenant :
- au moins un reformeur (3) selon l'une quelconque des revendications 1 à 6, et
- au moins une pile à combustible (2) pour générer du courant électrique à partir du gaz de reformage servant de gaz anodique et d'un gaz d'agent oxydant.
